# EUROPEAN PATENT APPLICATION

(11) **EP 3 637 130 A1**
(43) Date of publication of application: **15.04.2020**
(21) Application number: 18814118.8
(22) Date of filing: 01.06.2018
(51) Int. Cl.: G01S 7/481, G01C 3/06

(54) **ELECTROMAGNETIC WAVE DETECTING DEVICE, ELECTROMAGNETIC WAVE DETECTING SYSTEM, AND PROGRAM**

(30) Priority: 09.06.2017 JP 2017114597
(71) Applicant: Kyocera Corporation, Kyoto-shi, Kyoto 612-8501 (JP)
(72) Inventor: OKADA, Hiroki, Kyoto-shi Kyoto 612-8501 (JP); UCHIDA, Eri, Kyoto-shi Kyoto 612-8501 (JP)
(74) Representative: Viering, Jentschura & Partner mbB Patent- und Rechtsanwälte
(86) International application number: PCT/JP2018/021274
(87) International publication number: WO 2018/225660

(57) **Abstract**

An electromagnetic wave detection apparatus (10) includes a detector (17), a propagation unit (15), and a controller (13). The detector (17) includes a first detection element (21). The first detection element (21) detects electromagnetic waves. The propagation unit (15) includes a first propagation element group (18). The first propagation element group (18) includes a plurality of propagation elements (20). The propagation elements (20) switch between allowing and not allowing propagation of incident electromagnetic waves towards the first detection element (21). The controller (13) is capable of controlling switching of each propagation element (20) between allowing and not allowing the propagation. The controller (13) sequentially causes different propagation elements (20) to switch between allowing and not allowing the propagation.

## Description

### CROSS-REFERENCE TO RELATED APPLICATION

The present application claims priority to and the benefit of Japanese Patent Application No. 2017-114597 filed June 9, 2017, the entire contents of which are incorporated herein by reference.

### TECHNICAL FIELD

The present disclosure relates to an electromagnetic wave detection apparatus, an electromagnetic wave detection system, and a program.

### BACKGROUND

In recent years, apparatuses have been developed to acquire information related to the surroundings from the results of detection by a detector that detects electromagnetic waves. For example, a detector for measuring the distance to an object of detection two-dimensionally for each detection element is known. See patent literature (PTL) 1. Demand exists for increased resolution of the detector in such an electromagnetic wave detection apparatus.

### CITATION LIST

### Patent Literature

PTL 1: JP2011-220732A

### SUMMARY

An electromagnetic wave detection apparatus according to a first aspect includes:
a detector including a first detection element configured to detect electromagnetic waves;
a propagation unit including a first propagation element group that includes a plurality of propagation elements configured to switch between allowing and not allowing propagation of incident electromagnetic waves towards the first detection element; and
a controller capable of controlling switching of each propagation element between allowing and not allowing the propagation and configured to sequentially cause different propagation elements to switch between allowing and not allowing the propagation.

An electromagnetic wave detection system according to a second aspect includes:
a detector including a first detection element configured to detect electromagnetic waves;
a propagation unit including a first propagation element group that includes a plurality of propagation elements configured to switch between allowing and not allowing propagation of incident electromagnetic waves towards the first detection element; and
a controller capable of controlling switching of each propagation element between allowing and not allowing the propagation and configured to sequentially cause different propagation elements to switch between allowing and not allowing the propagation.

A program according to a third aspect is for an electromagnetic wave detection apparatus including a detector, a propagation unit, and a controller, the detector including a first detection element configured to detect electromagnetic waves, the propagation unit including a first propagation element group that includes a plurality of propagation elements configured to switch between allowing and not allowing propagation of incident electromagnetic waves towards the first detection element, and the controller being configured to control switching of each propagation element between allowing and not allowing the propagation, the program causing the electromagnetic wave detection apparatus to:
sequentially cause different propagation elements to switch between allowing and not allowing the propagation.

### BRIEF DESCRIPTION OF THE DRAWINGS

In the accompanying drawings:
FIG. 1 is a configuration diagram schematically illustrating an electromagnetic wave detection apparatus according to the present embodiment;
FIG. 2 is a state diagram illustrating the propagation state of electromagnetic waves from an irradiator to an object, a propagation unit, and a detector of FIG. 1;
FIG. 3 is a functional block diagram schematically illustrating the internal configuration of a detection element of FIG. 1;
FIG. 4 is a state diagram illustrating the propagation state of electromagnetic waves when the propagation unit of FIG. 1 switches one propagation element in each propagation element group to a first state at a first timing;
FIG. 5 is a state diagram illustrating the propagation state of electromagnetic waves when the propagation unit of FIG. 1 switches one propagation element in each propagation element group to the first state at a second timing;
FIG. 6 is a state diagram illustrating the propagation state of electromagnetic waves when the propagation unit of FIG. 1 switches one propagation element in each propagation element group to the first state at a third timing;
FIG. 7 is a timing chart indicating the emission timing of electromagnetic waves, the signal intensity of electric signals accumulated by a first accumulation element and a second accumulation element, and the detection timing in the detection elements to illustrate the principle of ranging by a ranging sensor configured by the irradiator, detection elements, and controller of FIG. 1; and
FIG. 8 is a flowchart illustrating control, executed by the controller of FIG. 1, to generate information of a predetermined field of view.

### DETAILED DESCRIPTION

Embodiments of an electromagnetic wave detection apparatus to which the present disclosure is applied are described below with reference to the drawings. Increasing the number of detection elements in the detector of an electromagnetic wave detection apparatus improves the resolution. It is difficult to increase the number of pixels in some detectors with a complex structure, however, such as TOF image sensors. An electromagnetic wave detection apparatus to which the present disclosure is applied can improve the resolution without increasing the number of detection elements by being configured to detect electromagnetic waves at a plurality of positions with one detection element.

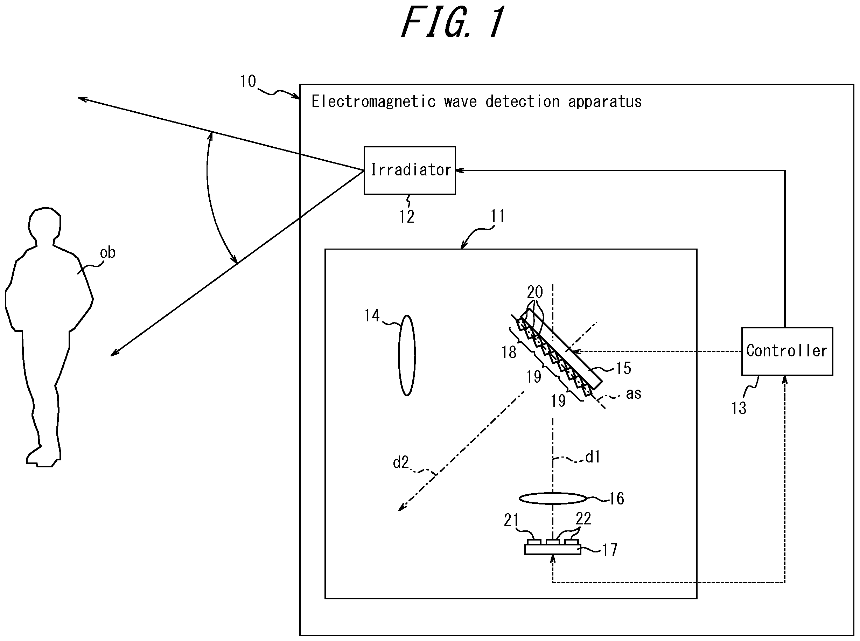

As illustrated in FIG. 1, an electromagnetic wave detection apparatus 10 according to the present disclosure includes an electromagnetic wave detection unit 11, an irradiator 12, and a controller 13.

In the drawings described below, the dashed lines connecting functional blocks indicate the flow of control signals or communicated information. The communication represented by the dashed lines may be wired communication or wireless communication. The solid lines projecting from each functional block indicate beams of electromagnetic waves.

The electromagnetic wave detection unit 11 includes a pre-stage optical system 14, a propagation unit 15, a post-stage optical system 16, and a detector 17.

The pre-stage optical system 14 includes either or both of a lens and a mirror, for example, and forms an image of an object ob that becomes a subject of imaging.

It suffices for the propagation unit 15 to be provided at or near a primary image formation position, which is the position where the image of the object ob located at a predetermined position separate from the pre-stage optical system 14 is formed by the pre-stage optical system 14. In the present embodiment, the propagation unit 15 is provided at the primary image formation position.

The propagation unit 15 has an action surface "as" on which electromagnetic waves that pass through the pre-stage optical system 14 are incident. The action surface as is a surface that, in at least one of the first state and the second state described below, produces effects on the electromagnetic waves such as reflection and transmission. At least a first propagation element group 18 is disposed on the action surface as.

In greater detail, a plurality of propagation element groups 18, 19 in the present embodiment, including the first propagation element group 18 and another propagation element group 19, are disposed one- or two-dimensionally on the action surface as.

Each propagation element group 18, 19 is configured by a plurality of propagation elements 20 disposed on the action surface as. The plurality of propagation elements 20 are disposed one- or two-dimensionally on the action surface as. In greater detail, the propagation elements 20 in each propagation element group 18, 19 are disposed in a matrix in the present embodiment. FIG. 1 schematically illustrates nine propagation elements 20, which do not necessarily match the number of propagation elements 20 in other figures described in the present embodiment.

The propagation unit 15 can switch each propagation element 20 between a first state of propagating the electromagnetic waves incident on the action surface as in a first direction d1 and a second state of propagating the electromagnetic waves in a second direction d2. As described below, the detector 17 is disposed in the first direction d1 from the propagation unit 15. In the first state, the propagation unit 15 therefore propagates the electromagnetic waves incident on the action surface as towards the detector 17. In the second state, the propagation unit 15 propagates the electromagnetic waves incident on the action surface as in a direction other than the detector 17.

As described below, the propagation element group 18 is associated with a detection element 21 in the detector 17, and the propagation element group 19 is associated with a detection element 22 in the detector 17. In the first state, the propagation elements 20 of the propagation element groups 18, 19 propagate electromagnetic waves incident on the action surface as towards the detection elements 21, 22 corresponding to the propagation element groups 18, 19. The plurality of propagation elements 20 in any propagation element group 18, 19 therefore switches between allowing and not allowing propagation of incident electromagnetic waves towards a single detection element 21, 22 corresponding to the propagation element group 18, 19.

In the present embodiment, the first state is a first reflecting state of reflecting the electromagnetic waves incident on the action surface as towards the first direction d1. The second state is a second reflecting state of reflecting the electromagnetic waves incident on the action surface as in the second direction d2.

In greater detail, the propagation unit 15 of the present embodiment includes a reflecting surface that reflects the electromagnetic waves on each propagation element 20. The propagation unit 15 switches each propagation element 20 between the first reflecting state and the second reflecting state by changing the orientation of the reflecting surface of each propagation element 20.

In the present embodiment, the propagation unit 15 includes a digital micro mirror device (DMD), for example. The DMD can drive minute reflecting surfaces that configure the action surface as to switch the reflecting surface on each propagation element 20 between inclined states of +12° and ±12° relative to the action surface as. The action surface as is parallel to the board surface of a substrate on which the minute reflecting surfaces are mounted in the DMD.

The post-stage optical system 16 is provided in the first direction d1 from the propagation unit 15. The post-stage optical system 16 includes either or both of a lens and a mirror, for example. The post-stage optical system 16 forms an image of the object ob represented by the electromagnetic waves whose propagation direction is switched at the propagation unit 15.

In the present embodiment, the post-stage optical system 16 is formed to have a predetermined focal distance. The post-stage optical system 16 with the predetermined focal distance associates each propagation element group 18, 19 with one of the detection elements 21, 22 of the detector 17, described below. In greater detail, the post-stage optical system 16 makes the association by forming, on one of the detection elements 21, 22, the image of electromagnetic waves formed on the propagation element groups 18, 19 by the pre-stage optical system 14. In other words, the post-stage optical system 16 propagates the electromagnetic waves incident on a plurality of propagation elements 20 in the first state in the propagation element group 18, 19 towards the detection element 21, 22 corresponding to the propagation element group 18, 19.

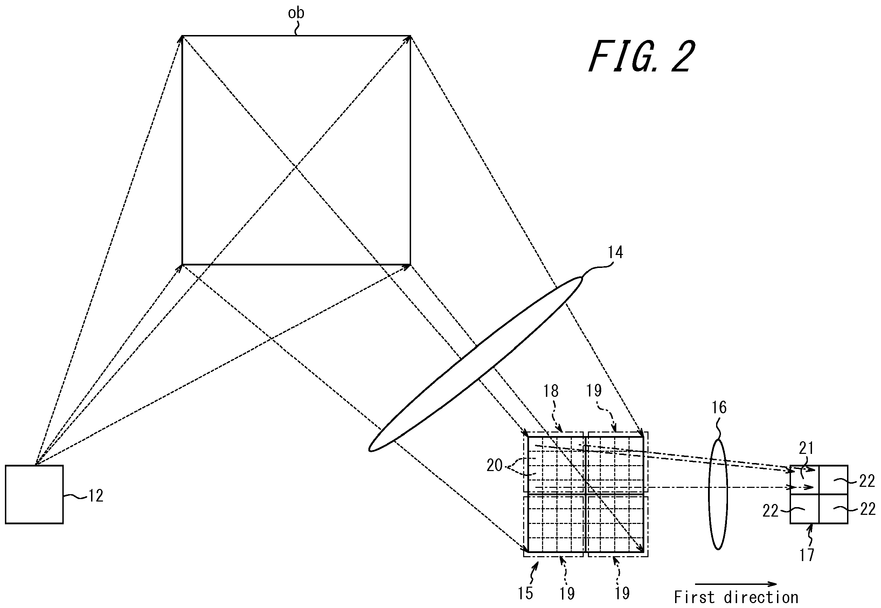

As illustrated in FIG. 2, the electromagnetic waves irradiated from the irradiator 12 are reflected and scattered in each small area of the surface of the object ob. The image from the reflected waves of the object ob is formed on the propagation unit 15 by the pre-stage optical system 14. The image of electromagnetic waves propagated in the first direction d1 by the propagation unit 15 is formed on the detector 17 by the post-stage optical system 16.

The post-stage optical system 16 forms the image of electromagnetic waves formed on the first propagation element group 18 of the propagation unit 15 on the first detection element 21. Accordingly, all 16 of the propagation elements 20 forming the first propagation element group 18 propagate the electromagnetic waves incident on the propagation elements 20 towards the first detection element 21. The propagation elements 20 in the other propagation element group 19 similarly propagate electromagnetic waves towards the detection element 22 corresponding to the propagation element group 19.

The four propagation element groups 18, 19 of the propagation unit 15, the 16 propagation elements 20 in each propagation element group 18, 19, and the four detection elements 21, 22 of the detector 17 are depicted schematically in FIG. 2. Accordingly, the number of propagation element groups 18, 19, propagation elements 20, and detection elements 21 depicted in FIG. 2 do not necessarily match the number of propagation element groups 18, 19, propagation elements 20, and detection elements 21 in the other figures described in the present embodiment.

In FIG. 1, the detector 17 is provided along the path of electromagnetic waves that propagate through the post-stage optical system 16 after propagating in the first direction d1 due to the propagation unit 15. The detector 17 includes at least the first detection element 21. In greater detail, the detector 17 includes a plurality of detection elements 21, 22 including the first detection element 21 and other detection elements 22 in the present embodiment. Each detection element 21, 22 detects electromagnetic waves that pass through the post-stage optical system 16, i.e. electromagnetic waves that propagate in the first direction d1.

In greater detail, the detector 17 in the present embodiment includes a ranging image sensor, an image sensor, or a thermosensor. Specifically, the detector 17 in the present embodiment is a ranging image sensor. The detection elements 21, 22 of the detector 17 that is a ranging image sensor detect electromagnetic waves in the infrared light band.

The detection elements 21, 22 may detect an image of electromagnetic waves in a band other than infrared rays, such as a visible light image, to function as an image sensor or a thermosensor. When the detector 17 is an image sensor, the electromagnetic wave detection apparatus 10 that includes the detector 17 can acquire image information. When the detector 17 is a thermosensor, the electromagnetic wave detection apparatus 10 that includes the detector 17 can acquire temperature image information.

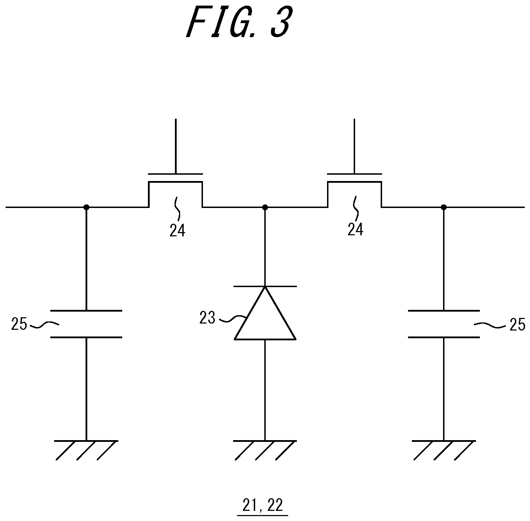

In greater detail, the detection elements 21, 22 of the detector 17 that is a ranging image sensor in the present embodiment each include a single conversion element 23, a plurality of switch elements 24, and the same number of accumulation elements 25 as the switch elements 24, as illustrated in FIG. 3.

The conversion element 23 includes an element configured as a ranging sensor. The conversion element 23 is, for example, an avalanche photodiode (APD) or a photodiode (PD). The conversion element 23 converts incident electromagnetic waves to an electric signal in accordance with the intensity of the electromagnetic waves. Each switch element 24 is, for example, a field effect transistor (FET). The switch elements 24 can switch between allowing and not allowing transfer of the electric signal generated by the conversion element 23 to the accumulation elements 25. The accumulation elements 25 are, for example, capacitors. The accumulation elements 25 accumulate the electric signal generated by the conversion element 23.

In greater detail, each detection element 21, 22 in the present embodiment includes a single conversion element 23, two switch elements 24, and two accumulation elements 25. Each detection element 21, 22 may be configured to include a plurality of conversion elements 23.

The transfer time of the electric signal from the conversion element 23 to the plurality of accumulation elements 25 in each detection element 21, 22 is shifted by a predetermined phase difference relative to another accumulation element 25. In the present embodiment, the accumulation period of the two accumulation elements 25 in each detection element 21, 22 is shifted 180°.

In greater detail, the detector 17 in the present embodiment is an active sensor that detects reflected waves, from the object ob, of electromagnetic waves irradiated towards the object ob from the irradiator 12. The detector 17 in the present embodiment detects reflected waves, from the object ob, of electromagnetic waves irradiated towards the object ob after being irradiated from the irradiator 12.

The detector 17 in the present embodiment notifies the controller 13 of detection results in the form of an electric signal. The detection results correspond to the intensity of reflected waves, from the object ob, detected by the detection elements 21, 22.

The detector 17 is a ranging image sensor in the present embodiment and generates information in image form. Because of this, blur decreases as the detector 17 is closer to the image formation position. The detector 17 is therefore preferably provided near the secondary image formation position, which is the position of image formation by the post-stage optical system 16, and most preferably at the secondary image formation position. In greater detail, the detector 17 in the present embodiment is provided at the secondary image formation position.

When the detector 17 includes a single detection element 21, however, it suffices to detect electromagnetic waves. Image formation at the detection surface is unnecessary. In a configuration including only one detection element 21, the detector 17 therefore need not be provided at the secondary image formation position, which is the position of image formation by the post-stage optical system 16. In other words, as long as electromagnetic waves from all angles of view can be incident on the detection surface, the detector 17 with this configuration may be disposed at any position along the path of electromagnetic waves that propagate in the first direction d1, due to the propagation unit 15, and subsequently pass through the post-stage optical system 16.

The irradiator 12 emits at least one of infrared rays, visible light rays, ultraviolet rays, and radio waves. In greater detail, the irradiator 12 emits infrared rays in the present embodiment. The irradiator 12 irradiates electromagnetic waves towards the object ob.

The irradiator 12 emits electromagnetic waves radially over a wide angle. The irradiator 12 can emit electromagnetic waves periodically in pulses. For example, the irradiator 12 includes a light emitting diode (LED), a laser diode (LD), or the like. The irradiator 12 switches between emitting and not emitting electromagnetic waves based on control by the controller 13, described below.

The controller 13 includes one or more processors and a memory. The term "processor" encompasses either or both general-purpose processors that execute particular functions by reading particular programs and dedicated processors that are specialized for particular processing. The dedicated processor may include an application specific integrated circuit (ASIC). The processor may include a programmable logic device (PLD). The PLD may include a field-programmable gate array (FPGA). The controller 13 may include either or both of a system-on-a-chip (SoC) that has one processor or a plurality of processors working together and a system-in-a-package (SiP).

The controller 13 can control switching of propagation element 20 between allowing and not allowing propagation towards the detection elements 21, 22, i.e. the controller 13 can control switching between the first state and the second state. When executing control for generating information of a predetermined field of view, the controller 13 sequentially causes different propagation elements 20 to switch between allowing and not allowing propagation of incident electromagnetic waves towards the detection elements 21, 22. In the present embodiment, the controller 13 sequentially causes different propagation elements 20 to switch between allowing and not allowing propagation of incident electromagnetic waves towards the detection elements 21, 22 by switching the propagation elements 20 to the first state. The controller 13 in the present embodiment sequentially causes different propagation elements 20 to switch between allowing and not allowing propagation of incident electromagnetic waves towards the detection elements 21, 22 independently in each of the propagation element groups 18, 19.

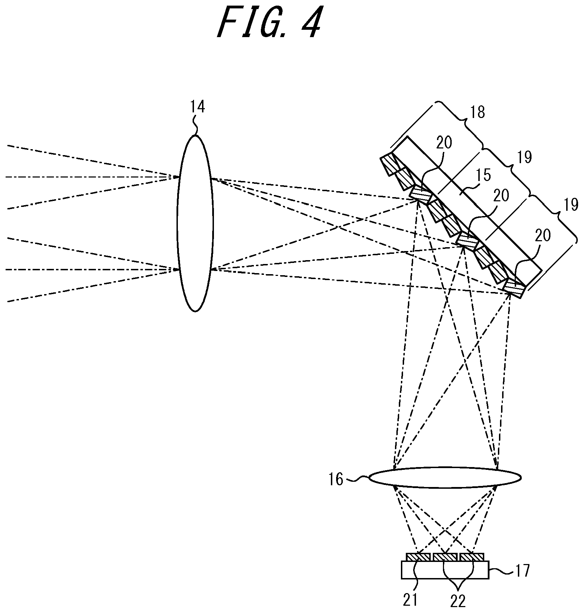

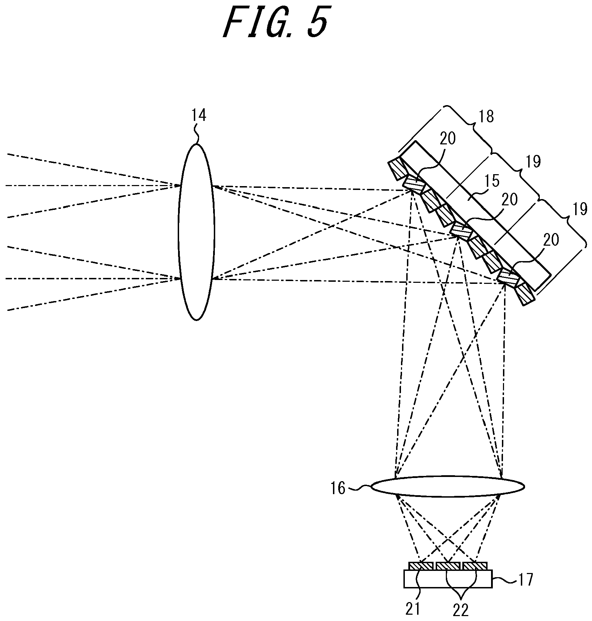

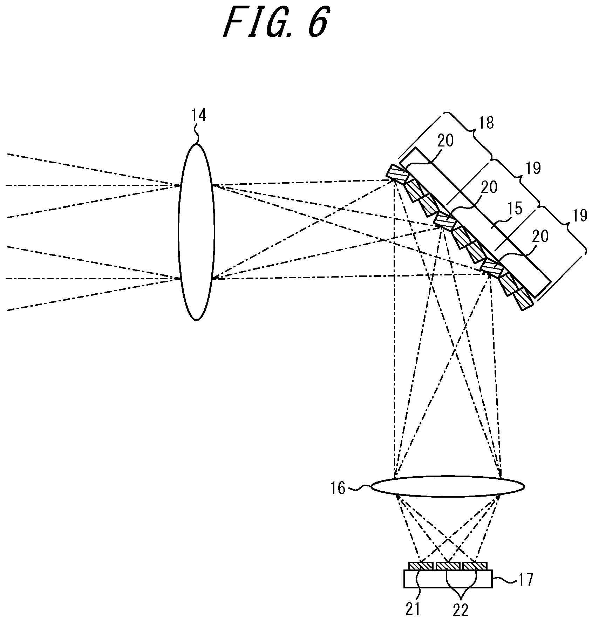

The controller 13 switches one propagation element 20 in each propagation element group 18, 19 to the first state at a first timing, as illustrated in FIG. 4. At a second timing following the first timing, the controller 13 switches a different propagation element 20 in each propagation element group 18, 19 to the first state than the propagation element 20 switched to the first state at the first timing, as illustrated in FIG. 5. At a third timing following the second timing, the controller 13 switches a different propagation element 20 in each propagation element group 18, 19 to the first state than the propagation elements 20 switched to the first state at the first timing and the second timing, as illustrated in FIG. 6.

In the present embodiment, the controller 13 causes the irradiator 12 to emit pulses of electromagnetic waves periodically when executing control for generating information of a predetermined field of view. The controller 13 in the present embodiment sequentially causes different propagation elements 20 to switch between allowing and not allowing propagation of incident electromagnetic waves towards the detection elements 21, 22 each time the irradiator 12 emits electromagnetic waves.

In the present embodiment, the controller 13 controls the propagation unit 15 so that each time, the same number of propagation elements 20 switch between allowing and not allowing propagation of incident electromagnetic waves towards the detection elements 21, 22. The controller 13 in the present embodiment causes one propagation element 20 to switch to a different propagation element 20 during each switching between allowing and not allowing propagation of incident electromagnetic waves towards the detection elements 21, 22. The number of propagation elements 20 to switch is not limited to one and may instead be two or more.

When executing control for generating information of a predetermined field of view, the controller 13 in the present embodiment sequentially causes the propagation elements 20 to switch until all of the propagation elements 20 included in the propagation unit 15 switch between allowing and not allowing the propagation.

The controller 13 acquires information related to a predetermined field of view of the electromagnetic wave detection apparatus 10 based on the detection results acquired from the detector 17. The controller 13 acquires information related to the predetermined field of view incident on the detector 17 by arranging the detection results in accordance with the position in the propagation unit 15 of the propagation element 20 that propagates incident electromagnetic waves towards the detection elements 21, 22.

The information of the predetermined field of view is, for example, distance information, image information, and temperature information in the viewing direction within the predetermined field of view of the electromagnetic wave detection apparatus 10. As described above, the controller 13 in the present embodiment acquires distance information, in image form, along the viewing direction in the predetermined field of view by flash time-of-flight (ToF) based on the detection results of the detector 17. Details are provided below.

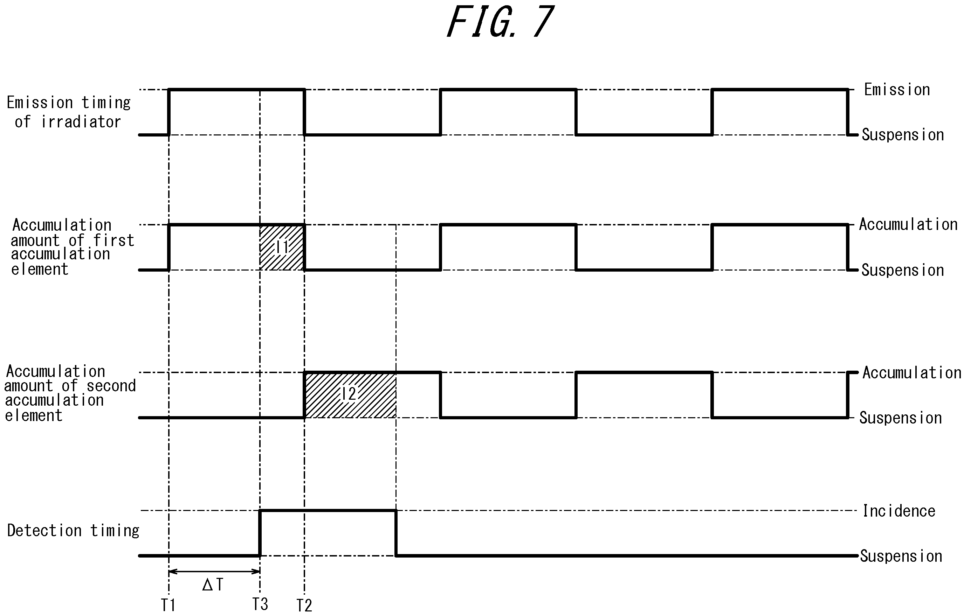

As illustrated in FIG. 7, the controller 13 causes the irradiator 12 to emit pulses of electromagnetic waves by inputting, to the irradiator 12, an electromagnetic wave emission signal that switches ON/OFF in pulses (see the "emission timing of irradiator" section). The controller 13 in the present embodiment turns a first switch element 24 in all of the detection elements 21, 22 ON and causes an electric signal to be accumulated in a first accumulation element 25 in synchronization with emission of a single pulse of electromagnetic waves (see "accumulation amount of first accumulation element" section). The controller 13 turns a second switch element 24 in all of the detection elements 21, 22 ON and causes an electric signal to be accumulated in a second accumulation element 25 in synchronization with suspension of emission of electromagnetic waves (see "accumulation amount of second accumulation element" section).

In a configuration with three or more accumulation elements 25 in the detection elements 21, 22, one cycle of irradiation and non-irradiation of a pulse of electromagnetic waves in the irradiator 12 may be divided by the number of accumulation elements 25 into periods, and an electric signal may be accumulated in each accumulation element 25 in synchronization with the corresponding period.

The controller 13 acquires an electric signal I1 corresponding to the intensity of electromagnetic waves detected by the conversion element 23 during the accumulation period of the first accumulation element 25 for emission of a single pulse of electromagnetic waves during the period from timing T1 to T2 (see "accumulation amount of first accumulation element" section). The controller 13 also acquires an electric signal I2 corresponding to the intensity of electromagnetic waves detected by the conversion element 23 during the accumulation period of the second accumulation element 25 for emission of electromagnetic waves during the period from timing T1 to T2 (see "accumulation amount of second accumulation element" section).

The controller 13 calculates a timing T3 at which electromagnetic waves reach the detection elements 21, 22 based on the ratio between the electric signals I1, I2 that correspond to the intensity of electromagnetic waves accumulated respectively in the first accumulation element 25 and the second accumulation element 25 (see "detection timing" section).

The arrival of electromagnetic waves at the detection elements 21, 22 is delayed with respect to irradiation of the electromagnetic waves from the irradiator 12 in accordance with the distance, from the electromagnetic wave detection apparatus 10, of the object ob that reflects the irradiated electromagnetic waves. As the delay increases, the accumulation amount of the electric signal in the second accumulation element 25 increases as compared to the accumulation amount of the electric signal in the first accumulation element 25. Therefore, as described above, the timing T3 at which the electromagnetic waves arrive at the detection elements 21, 22 can be calculated based on the ratio of the electric signals I1, I2 accumulated respectively in the first accumulation element 25 and the second accumulation element 25.

For each detection element 21, 22, the controller 13 calculates the time ΔT from the emission start timing T1 of electromagnetic waves to the timing T3 when the electromagnetic waves reach the detection elements 21, 22. Furthermore, the controller 13 multiplies the time ΔT by the speed of light and divides by two to calculate the distance to a small area on the object ob corresponding to each detection element 21, 22.

The controller 13 calculates the distance to each small area on the object ob using the detection results of the detection elements 21, 22 for each propagation element 20 in the propagation element groups 18, 19. The controller 13 acquires distance information, in image form, along the viewing direction in the predetermined field of view. This distance information is formed by the distance information corresponding to the distance to each small area on the object ob for all of the propagation elements 20.

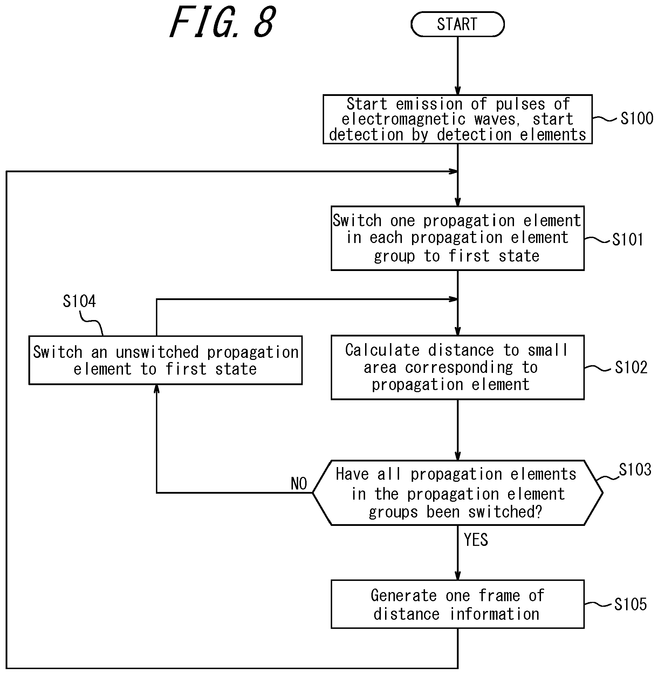

Next, the control executed by the controller 13 in the present embodiment to generate information of a predetermined field of view is described with reference to the flowchart of FIG. 8. The controller 13 starts the control for generating information of a predetermined field of view when power to the electromagnetic wave detection apparatus 10 is turned on, for example. The controller 13 ends the control when the power to the electromagnetic wave detection apparatus 10 is turned off, or when the operating mode of the electromagnetic wave detection apparatus 10 is switched to a mode other than information generation, for example.

In step S100, the controller 13 causes the irradiator 12 to start emitting pulses of electromagnetic waves. The controller 13 causes the detection elements 21, 22 to detect electromagnetic waves. Detection of electromagnetic waves in the detection elements 21, 22 refers to accumulating an electric signal in the plurality of accumulation elements 25 and notifying the controller 13 of the detection results, as described above. After the controller 13 starts the emission of electromagnetic waves and detection, the process proceeds to step S101.

In step S101, the controller 13 causes one propagation element 20 in the propagation element groups 18, 19 to switch to the first state. After the controller 13 switches one of the propagation elements 20 to the first state, the process proceeds to step S102.

In step S102, the controller 13 calculates the distance to the small area on the object ob corresponding to the propagation element 20 that switched to the first state in step S101. After the controller 13 calculates the distance, the process proceeds to step S103.

In step S103, the controller 13 judges whether all of the propagation elements 20 in each propagation element group 18, 19 have been switched to the first state. When the controller 13 judges that not all of the propagation elements 20 have been switched to the first state, the process proceeds to step S104. When the controller 13 judges that all of the propagation elements 20 have been switched to the first state, the process proceeds to step S105.

In step S104, the controller 13 causes one propagation element 20 in the propagation element groups 18, 19 that has not been switched to the first state to switch to the first state. After this switching to the first state by the controller 13, the process returns to step S102.

In step S105, the controller 13 uses the distance calculated for all of the propagation elements 20 to generate one frame of distance information, in image form, along the viewing direction in the predetermined field of view. After this generation of one frame of distance information by the controller 13, the process returns to step S101.

The electromagnetic wave detection apparatus 10 of the present embodiment with the above configuration includes the propagation unit 15 and the controller 13. The propagation unit 15 includes the first propagation element group 18, which includes the plurality of propagation elements 20 that switch between allowing and not allowing propagation towards the first detection element 21. The controller 13 sequentially causes different propagation elements 20 to switch between allowing and not allowing the propagation of incident electromagnetic waves towards the first detection element 21. This configuration allows the electromagnetic wave detection apparatus 10 to cause one detection element 21 to detect electromagnetic waves emitted from a plurality of small areas on the object ob. Accordingly, the electromagnetic wave detection apparatus 10 can improve the resolution of the detector 17 even when it is difficult to increase the number of pixels in the detector 17.

In the electromagnetic wave detection apparatus 10 of the present embodiment, the electromagnetic waves for which the propagation element 20 switches between allowing and not allowing the propagation are reflected waves of electromagnetic waves irradiated onto the object ob from the irradiator 12. Accordingly, the electromagnetic wave detection apparatus 10 can cause the detector 17 to function as an active sensor.

In the electromagnetic wave detection apparatus 10 of the present embodiment, electromagnetic waves are irradiated periodically, and each time electromagnetic waves are emitted, different propagation elements 20 sequentially switch between allowing and not allowing the propagation of incident electromagnetic waves towards the first detection element 21. This configuration allows the electromagnetic wave detection apparatus 10 to generate information of the small area on the object ob corresponding to each propagation element 20 based on the irradiated electromagnetic waves. Accordingly, the electromagnetic wave detection apparatus 10 can cause the detector 17 to function as an active sensor capable of generating information of the small area on the object ob corresponding to each propagation element 20.

The electromagnetic wave detection apparatus 10 of the present embodiment includes the irradiator 12. Accordingly, the electromagnetic wave detection apparatus 10 can, as a unit, constitute an active sensor.

In the electromagnetic wave detection apparatus 10 of the present embodiment, the same number of propagation elements 20 are sequentially switched between allowing and not allowing propagation of incident electromagnetic waves towards the first detection element 21. This configuration allows the electromagnetic wave detection apparatus 10 to achieve a uniform range of electromagnetic waves propagated towards the detection element 21 for detection. Accordingly, the electromagnetic wave detection apparatus 10 can generate information of a predetermined field of view such that the density of information is uniform for the range.

In the electromagnetic wave detection apparatus 10 of the present embodiment, the detector 17 includes the plurality of detection elements 21, 22, the propagation unit 15 includes the plurality of propagation element groups 18, 19, and the controller 13 sequentially causes different propagation elements 20 to switch between allowing and not allowing propagation of incident electromagnetic waves towards the detection elements 21, 22 independently in each of the propagation element groups 18, 19. Accordingly, the electromagnetic wave detection apparatus 10 can improve the resolution of the detector 17 even when it is difficult to increase the number of pixels in the detector 17 that includes the plurality of detection elements 21, 22.

The electromagnetic wave detection apparatus 10 of the present embodiment sequentially causes different propagation elements 20 to switch between allowing and not allowing propagation of incident electromagnetic waves towards the detection element 21 until causing all of the propagation elements 20 included in the propagation unit 15 to switch between allowing and not allowing the propagation. Accordingly, the electromagnetic wave detection apparatus 10 can generate information based on electromagnetic waves in all of the small areas on the object ob in correspondence with all of the propagation elements 20.

The electromagnetic wave detection apparatus 10 of the present embodiment acquires information related to a predetermined field of view by arranging the detection results from the detection element 21 in accordance with the position in the propagation unit 15 of the propagation element 20 that switched between allowing and not allowing propagation of electromagnetic waves towards the detection element 21. Accordingly, the electromagnetic wave detection apparatus 10 can generate the information related to the predetermined field of view as information in the form of a one- or two-dimensional image.

Although the present disclosure has been explained using the accompanying drawings and examples, it is to be noted that various changes and modifications will be apparent to those of ordinary skill in the art based on the present disclosure. Therefore, such changes and modifications are to be understood as included within the scope of the present disclosure.

For example, in the present embodiment, the irradiator 12, controller 13, and electromagnetic wave detection unit 11 configure the electromagnetic wave detection apparatus 10, but instead of a single apparatus, at least the controller 13 and the electromagnetic wave detection unit 11 may configure an electromagnetic wave detection system.

In the present embodiment, the propagation unit 15 can switch the propagation direction of the electromagnetic waves incident on the action surface as between two directions, i.e. the first direction d1 and the second direction d2, but the propagation unit 15 may instead be capable of switching the propagation direction among three or more directions.

In the propagation unit 15 of the present embodiment, the first state is a first reflecting state for reflecting the electromagnetic waves incident on the action surface as in the first direction d1, and the second state is a second reflecting state for reflecting these electromagnetic waves in the second direction d2. This configuration is not, however, limiting.

For example, the second state may be a transmitting state for transmitting the electromagnetic waves incident on the action surface as for the electromagnetic waves to propagate in the second direction d2. In greater detail, the propagation unit 15 may include a shutter, on each propagation element 20, that has a reflecting surface that reflects electromagnetic waves. The propagation unit 15 with this configuration can open and close the shutter of each propagation element 20 to switch each propagation element 20 between the first reflecting state and the transmitting state that is the second reflecting state. An example of the propagation unit 15 with such a configuration is a propagation unit that includes a MEMS shutter including a plurality of openable shutters arranged in an array. Another example of the propagation unit 15 is a propagation unit that includes a liquid crystal shutter capable of switching, in accordance with liquid crystal orientation, between the reflecting state for reflecting electromagnetic waves and the transmitting state for transmitting electromagnetic waves. The propagation unit 15 with this configuration can switch each propagation element 20 between the reflecting state as the first state and the transmitting state as the second state by switching the liquid crystal orientation of each propagation element 20.

The electromagnetic wave detection apparatus 10 of the present embodiment is configured so that the detector 17 is an active sensor. The electromagnetic wave detection apparatus 10 is not, however, limited to this configuration. For example, the electromagnetic wave detection apparatus 10 can also achieve similar effects as in the first embodiment when the detector 17 is a passive sensor.

For example, the detector 17 in the first embodiment may be an image sensor, and the detector 17 may be caused to detect electromagnetic waves without the irradiator 12 irradiating electromagnetic waves, or without the irradiator 12 being provided. Similar effects as in the present embodiment can also be achieved with this configuration.

While the disclosed system has a variety of modules and/or units for implementing particular functions, these modules and units have only been indicated schematically in order to briefly illustrate the functionality thereof. It should be noted that no particular hardware and/or software is necessarily indicated. In this sense, it suffices for the modules, units, and other constituent elements to be hardware and/or software implemented so as to substantially execute the particular functions described herein. The various functions of different constituent elements may be implemented by combining or separating hardware and/or software in any way, and the functions may each be used individually or in some combination. An input/output (I/O) device or user interface including, but not limited to, a keyboard, display, touchscreen, or pointing device may be connected to the system directly or via an I/O controller. In this way, the various subject matter disclosed herein may be embodied in a variety of forms, and all such embodiments are included in the scope of the subject matter in the present disclosure.

### REFERENCE SIGNS LIST

- 10: Electromagnetic wave detection apparatus
- 11: Electromagnetic wave detection unit
- 12: Irradiator
- 13: Controller
- 14: Pre-stage optical system
- 15: Propagation unit
- 16: Post-stage optical system
- 17: Detector
- 18: First propagation element group
- 19: Other propagation element group
- 20: Propagation element
- 21: First detection element
- 22: Other detection element
- 23: Conversion element
- 24: Switch element
- 25: Accumulation element
- as: Action surface
- d1: First direction
- d2: Second direction
- ob: Object

## Claims

1. An electromagnetic wave detection apparatus comprising:
a detector comprising a first detection element configured to detect electromagnetic waves;
a propagation unit comprising a first propagation element group that includes a plurality of propagation elements configured to switch between allowing and not allowing propagation of incident electromagnetic waves towards the first detection element; and
a controller capable of controlling switching of each propagation element between allowing and not allowing the propagation and configured to sequentially cause different propagation elements to switch between allowing and not allowing the propagation.

2. The electromagnetic wave detection apparatus of claim 1, wherein the electromagnetic waves for which the propagation element switches between allowing and not allowing the propagation are reflected waves of electromagnetic waves irradiated onto an object from an irradiator.

3. The electromagnetic wave detection apparatus of claim 2, wherein the irradiator is configured to emit electromagnetic waves periodically; and
the controller is configured to sequentially cause the different propagation elements to switch between allowing and not allowing the propagation each time the irradiator emits the electromagnetic waves.

4. The electromagnetic wave detection apparatus of claim 2 or 3, further comprising the irradiator.

5. The electromagnetic wave detection apparatus of any one of claims 1 to 4, wherein the controller sequentially switches the same number of propagation elements between allowing and not allowing the propagation.

6. The electromagnetic wave detection apparatus of any one of claims 1 to 5,
wherein the detector comprises a plurality of detection elements that include the first detection element and are configured to detect electromagnetic waves;
the propagation unit comprises a plurality of propagation element groups that include the first propagation element group;
each propagation element group among the plurality of propagation element groups comprises a plurality of propagation elements configured to switch between allowing and not allowing propagation of incident electromagnetic waves towards the detection element corresponding to each propagation element group; and
the controller is configured to sequentially cause the different propagation elements to switch between allowing and not allowing the propagation independently in each propagation element group.

7. The electromagnetic wave detection apparatus of any one of claims 1 to 6, wherein the controller is configured to sequentially cause the different propagation elements to switch between allowing and not allowing the propagation until all of the propagation elements included in the propagation unit switch between allowing and not allowing the propagation.

8. The electromagnetic wave detection apparatus of any one of claims 1 to 7, wherein the controller is configured to acquire information related to a predetermined field of view by arranging a detection result, acquired based on switching between allowing and not allowing the propagation, from the detection element in accordance with a position in the propagation unit of the propagation element that switched between allowing and not allowing the propagation.

9. The electromagnetic wave detection apparatus of claim 8, wherein the information comprises image information in the predetermined field of view.

10. The electromagnetic wave detection apparatus of claim 8 or 9, wherein the information comprises distance information in a viewing direction in the predetermined field of view.

11. The electromagnetic wave detection apparatus of any one of claims 1 to 10, wherein the detector comprises an image sensor.

12. The electromagnetic wave detection apparatus of any one of claims 1 to 10, wherein the detector comprises a ranging image sensor.

13. An electromagnetic wave detection system comprising:
a detector comprising a first detection element configured to detect electromagnetic waves;
a propagation unit comprising a first propagation element group that includes a plurality of propagation elements configured to switch between allowing and not allowing propagation of incident electromagnetic waves towards the first detection element; and
a controller capable of controlling switching of each propagation element between allowing and not allowing the propagation and configured to sequentially cause different propagation elements to switch between allowing and not allowing the propagation.

14. A program for an electromagnetic wave detection apparatus comprising a detector, a propagation unit, and a controller, the detector comprising a first detection element configured to detect electromagnetic waves, the propagation unit comprising a first propagation element group that includes a plurality of propagation elements configured to switch between allowing and not allowing propagation of incident electromagnetic waves towards the first detection element, and the controller being configured to control switching of each propagation element between allowing and not allowing the propagation, the program causing the electromagnetic wave detection apparatus to:
sequentially cause different propagation elements to switch between allowing and not allowing the propagation.
